# EUROPÄISCHE PATENTSCHRIFT

(11) **EP 0 824 443 B1**
(45) Veröffentlichungstag und Bekanntmachung des Hinweises auf die Patenterteilung: **11.08.1999**
(21) Anmeldenummer: 96911931.2
(22) Anmeldetag: 02.05.1996
(51) Int. Cl.: B62K 21/12, B62H 5/04

(54) **SCHLOSS-LENKER-KOMBINATION**
LOCK-HANDLEBAR COMBINATION
GUIDON ET CADENAS COMBINES

(30) Priorität: 03.05.1995 DE 19516243
(43) Veröffentlichungstag der Anmeldung: 25.02.1998
(73) Patentinhaber: Tual, Véronique, 80339 München (DE); Tual, Chistine, 80339 München (DE)
(72) Erfinder: Tual, Véronique, 80339 München (DE); Tual, Chistine, 80339 München (DE)
(74) Vertreter: Rupprecht, Kay, Dipl.-Ing.
(86) Internationale Anmeldenummer: DE9600750
(87) Internationale Veröffentlichungsnummer: WO9634790

(56) Entgegenhaltungen:
- GB-A- 2 259 325
- US-A- 5 138 901
- US-A- 5 226 341
- US-A- 5 353 663

## Beschreibung

Bei der Schloß-Lenker-Kombination handelt es sich um eine Erfindung, die zwei Funktionen aufweist. Zum einen kann die Schloß-Lenker-Kombination zur Diebstahlsicherung verwendet werden, zum anderen als (zusätzlichen) Fahrradlenker. Die Druckschriften US 5353663, US 5226341, US 5138901 zeigen bekannte Schlösser mit Doppelfunktion. Bei diesen bekannten Vorrichtungen wird ein Bügelschloß bei Nichtbenutzung als Schloß, am Lenker befestigt. Der U-förmige Bügel ragt dabei nach vorne, so daß sich für den Fahrer eine Aufstützmöglichkeit ergibt. Die Aufstützmöglichkeiten sind durch diese spezielle Schloßbauart und Montageart beschränkt.

Bei der vorliegenden Erfindung liegt die Aufgabe zugrunde, dem Fahrradfahrer eine zusätzliche Lenkhilfe für sein Fahrrad bzw. einen Lenker für sein Fahrrad anzubieten, mit dem er sein Fahrrad zum einen lenken/steuern kann und den er zum anderen zur Sicherung seines Fahrrades vor Diebstahl verwenden kann.

Eine Schloß-Lenker Kombination gemäß der Erfindung wird mit den Merkmalen der Ansprüche 1 und 3 definiert.

Im folgenden wird die Erfindung anhand der in den Figuren dargestellten Ausführungsbeispielen erläutert:

Die Schloß-Lenker-Kombination besteht hauptsächlich aus einem nicht rostenden Material (z. B. Stahl), das weder mit Bolzenschneider, Feile, noch mit Säge, o.ä. zu durchtrennen ist .

Damit das Fahrrad beim Gebrauch der Schloß-Lenker-Kombination nicht verkratzt wird, ist dessen Großteil mit einer Kunststoffschicht überzogen. An den Griffen der Schloß-Lenker-Kombination befindet sich zusätzlich ein schaumstoffartiger, oder ein gummiartiger Antirutschbelag (1), um es dem Benutzer beim Lenken zum einen angenehmer zu machen und zum anderen das Abrutschen beim Fahren zu verhindern.

Die Schloß-Lenker-Kombination kann jede nur denkbare Form, sowie Größe annehmen. In den beigefügten Zeichnungen werden sowohl zwei verschiedene Formen (rund und eckig), als auch mehrere unterschiedliche Ausführungen dargestellt.

Die Form sollte für Lenkzwecke vorteilhaft sein. Sie soll dem Fahrer mehrere Greifmöglichkeiten bieten.

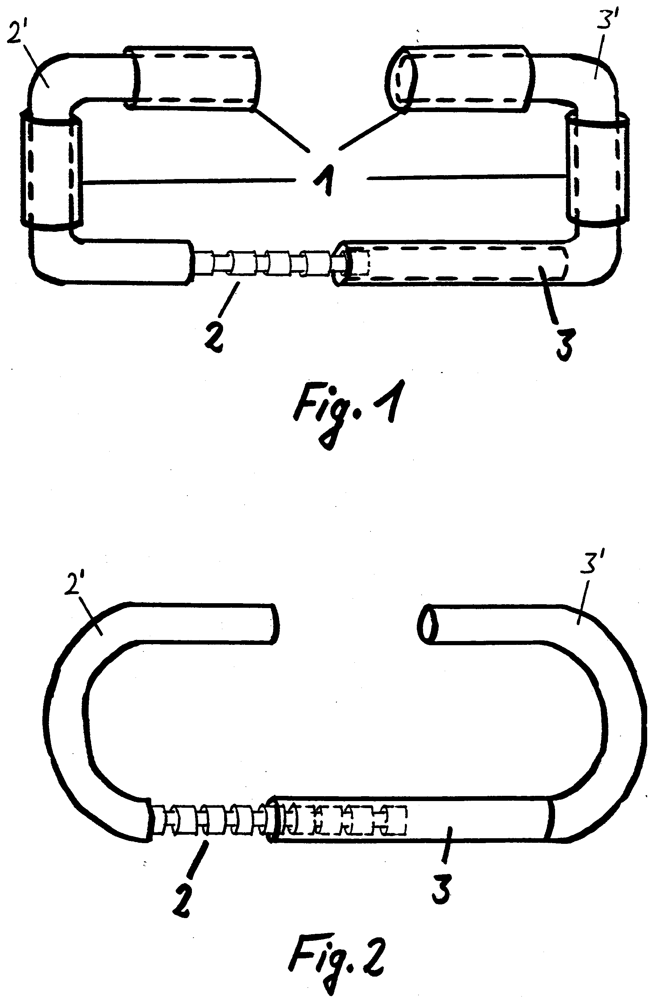

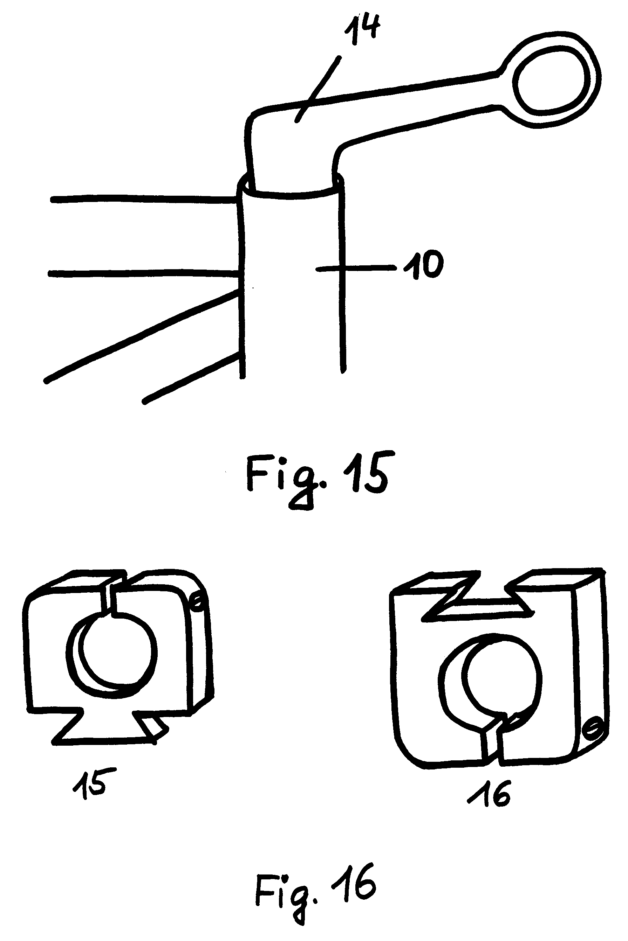

In Fig.2 wird die Seite der Schloß-Lenker-Kombination mit der eingekerbten Stange (2) in die andere Seite, ein Element mit einer, bzw. mehreren Aushöhlung/en, hier ein teilweise rohrförmiges Element (3) geschoben, so daß sich die Schloß-Lenker-Kombination je nach Bedarf zusammendrücken, bzw. auseinanderziehen läßt. Das stangenförmige Element kann eingekerbt (2, 4) sein, oder kann mit beliebig vielen Vorsprüngen (11) versehen sein, oder kann weder eingekerbt noch mit Vorsprüngen versehen sein (12). So kann die Schloß-Lenker-Kombination zum Sichern nicht nur am Fahrrad selber, sondern auch beispielsweise noch zusätzlich an eine Straßenlaterne angebracht werden. Bei der Art der Einkerbung der stangenförmigen Elemente, die im folgenden als Stangen bezeichnet werden gibt es verschiedene Möglichkeiten. In den Figuren 3 und 13 werden drei verschiedene Arten der Einkerbung gezeigt.

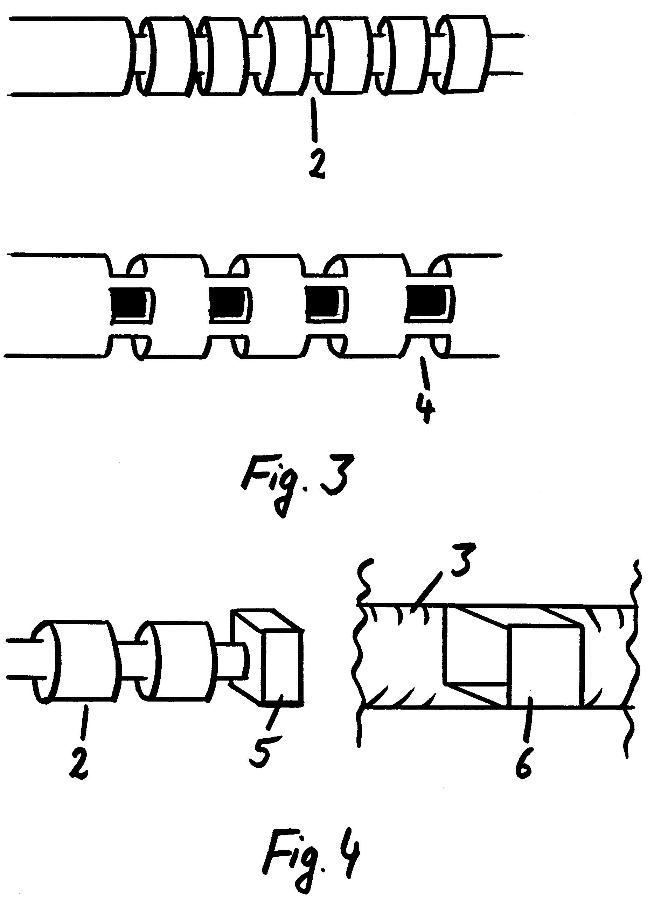

Bei der ersten Art wird, bzw. werden die Stange/n mehrmals in gleichen, oder ungleichen Abständen durchgehend eingekerbt (2). Dadurch läßt sich die Schloß-Lenker-Kombination in jede nur erdenkliche Position einstellen. Möchte der Benutzer nun die Schloß-Lenker-Kombination zum Lenken verwenden, muß ein Mechanismus vorhanden sein, der die eingekerbte/n Stange/n so fixiert, daß sie sich nicht mehr drehen läßt lassen. Dazu wird z. B. am Ende der eingekerbte/n Stange/n ein Vieleck (5) montiert, (in Fig.4 wurde zur Veranschaulichung ein Quadrat gezeichnet). Im anderen (teilweise) rohrförmigen Element ( 3), in das die Stange geschoben wird, befindet sich ein zum Vieleck passendes Gegenstück (6).

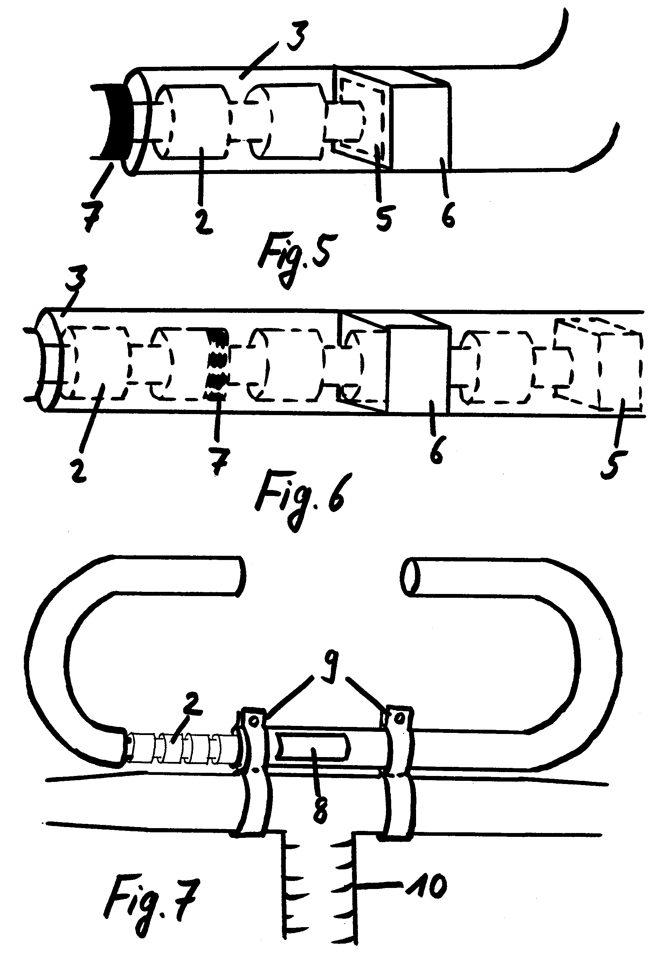

Will man nun die eingekerbte Stange zum Lenken fixieren, schiebt man diese soweit ein, bis das Vieleck im Gegenstück liegt. Damit der Benutzer weiß, wie weit er schieben muß, befindet sich auf der eingekerbten Stange eine Markierung (7). Erst wenn sich die Markierung am Rand der teilweise hohlen Stange (3) befindet, liegt das Vieleck im Gegenstück und der Vorsprung der Schließvorrichtung (8) rastet ein, so daß nun die Schließvorrichtung geschlossen werden kann. Dieses System hat nicht nur den Vorteil, die eingekerbte Stange zu sichern, so daß ein Lenken gefahrenlos möglich ist, sondern es besteht weiterhin die Möglichkeit, die eingekerbte Stange ganz in den Hohlkörper zu schieben (Fig.6) Bei der zweiten Art der Einkerbung (Fig. 3), wird die Stange mehrmals in gleichem oder in unterschiedlichem Abstand rundum nur teilweise eingekerbt (4). Dadurch kann dieser Teil zum Lenken sicher fixiert werden, ohne daß beispielsweise ein zusätzliches Vieleck montiert werden muß. Möchte der Benutzer lenken, stellt er seine gewünschte Position ein und sperrt die Schließvorrichtung ab.

Bei der dritten Art wird die Stange rundum mit beliebig groß und beliebig geformten Vorsprüngen versehen (11). Schiebt man nun den Teil der Schloß-Lenker-Kombination mit der Stange in den gegenüberliegenden (teilweise) hohlen Teil, so rastet die am gegenüberliegenden Teil montierte Schließvorrichtung hinter jedem Vorsprung ein. Um die Stange zum Lenken zu fixieren, kann das schon beschriebene Blockiersystem (Fig. 4 - Fig. 6) verwendet werden.

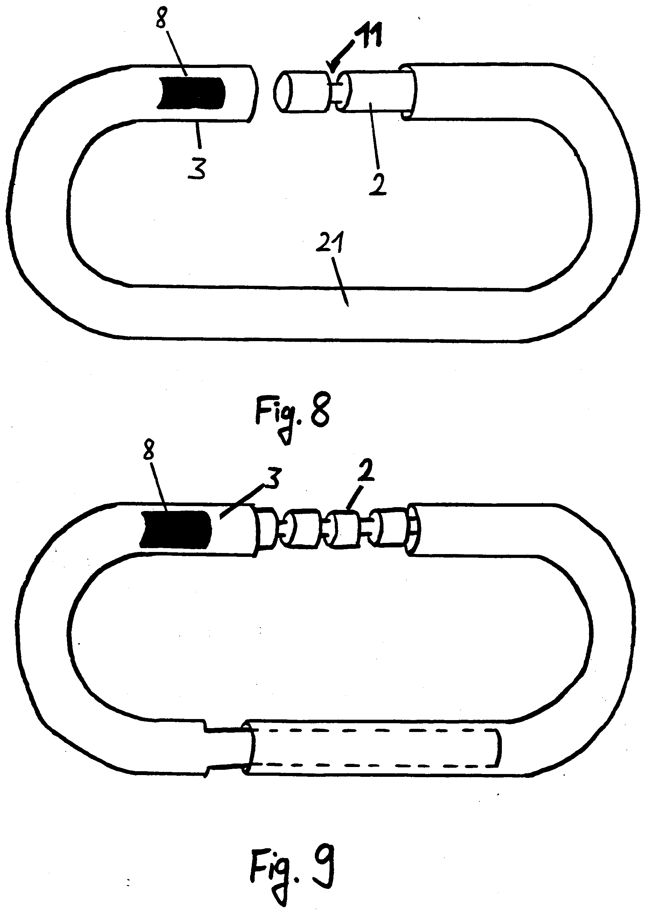

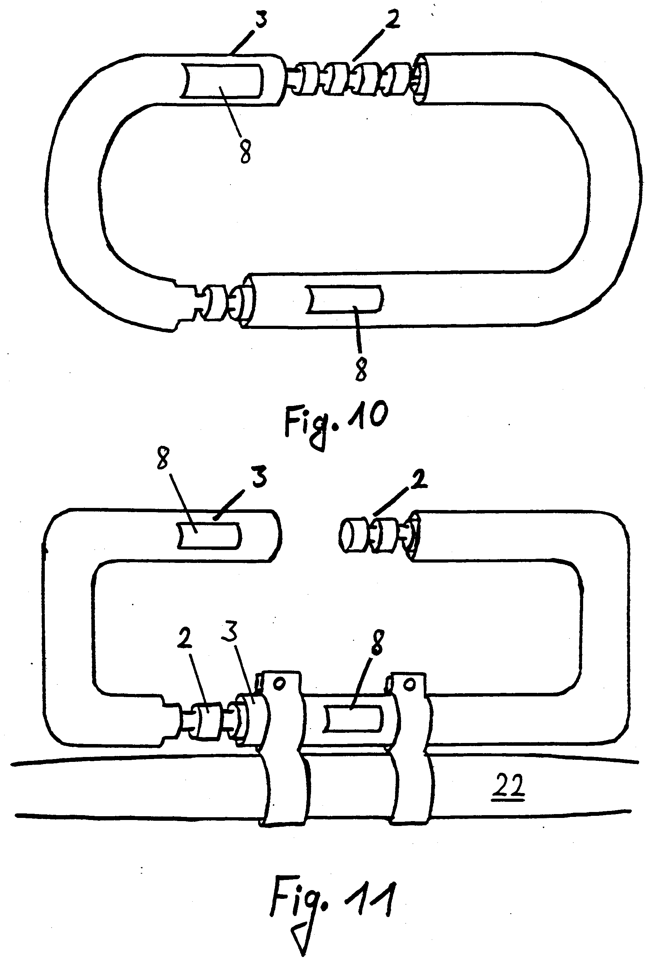

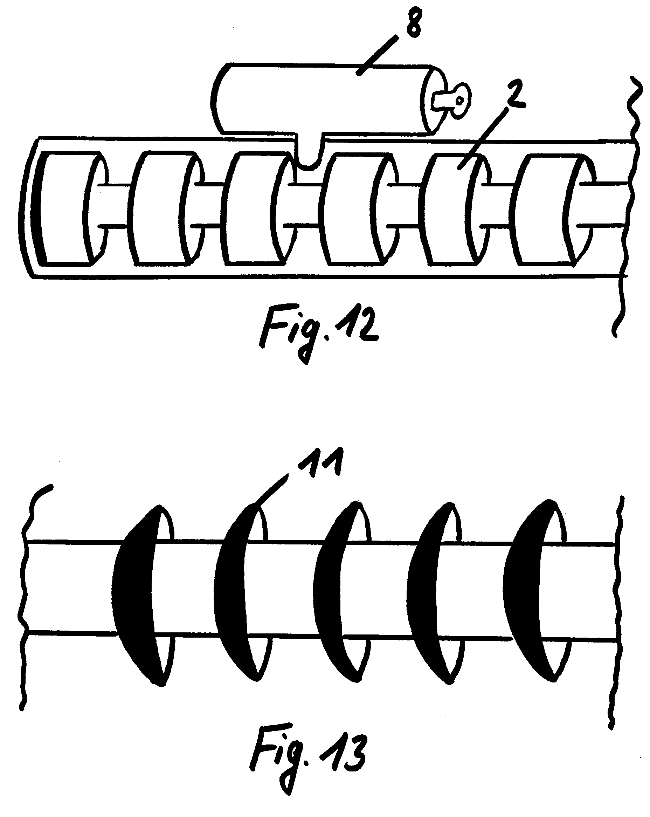

Im folgenden wird der Aufbau und die Funktionsweise der Schloß-Lenker-Kombination als Fahrradschloß erklärt. Da auch hier viele verschiedene Konstruktionen möglich sind, werden diejenigen aufgezeigt, die zeichnerisch dargestellt sind.
In der Ausführung gemäß Fig. 7 befindet sich auf der einen Seite eine eingekerbte, bzw. mit Vorsprüngen versehene Stange, die in die andere Seite geschoben wird. Dadurch, daß man das eine Teil in das andere schiebt, kann man die Schloß-Lenker-Kombination zusammendrücken, bzw. auseinanderziehen. Danach schließt man die jeweilige Schließvorrichtung ab. Es liegt beim Benutzer, wie er sein Fahrrad sichern möchte. Entweder er legt den einen Teil um den Fahrrad- rahmen und das andere Teil um eines der Räder, drückt dann die Schloß-Lenker-Kombination soweit zusammen, bis es nicht mehr geht und schließt die Schließvorrichtung/en ab. So kann das Fahrrad zwar vom Boden, jedoch nicht zum Fahren bewegt werden. Um das Fahrrad vor einem unbefugten Wegtragen zu sichern, kann der Benutzer die eine Seite um den Fahrradrahmen und die andere Seite um eine Laterne oder ähnliches legen, zusammendrücken und dann die jeweilige Schließvorrichtung/en absperren. Dadurch ist das Fahrrad auch vor einem Wegtragen geschützt.
In Fig. 8 wird die Variation dargestellt, bei der sich nur eine Stange in einem der beiden Griffe befindet. Da nur die Stange selber bewegt werden kann, d.h. die Schloß-Lenker-Kombination kann weder zusammengedrückt noch auseinandergezogen werden, ist nur eine Einkerbung (2), bzw. ein Vorsprung (11) notwendig . Die Stange wird soweit in den gegenüberliegenden Griff geschoben, bis diese in die Schließvorrichtung (8) einrastet und diese abgeschlossen werden kann.
In Fig. 9 wird die Variation dargestellt, bei der zwei Stangen vorgesehen sind. Die eine ist mehrfach eingekerbt (2), bzw. mit Vorsprüngen (11) versehen, befindet sich in einem der beiden Griffe und läßt sich herausziehen. An dem anderen Griff ist die dazugehörige Schließvorrichtung (8) montiert. Auf der unteren Seite der Schloß-Lenker-Kombination befindet sich die zweite Stange die nicht gekerbt (12) ist. Dadurch läßt sich der Teil, dessen Bestandteil jene Schiene (12) ist, rein-, bzw. herausschieben, so daß das Fahrrad noch zusätzlich z.B. an eine Straßenlaterne befestigt werden kann.
Bei der Variation der Schloß-Lenker-Kombination gemäß Fig. 10, ist nicht nur eine eingekerbte Stange (2) vorhanden, sondern eine zweite, die sich in einem der Griffe befindet. Natürlich können die Stangen auch mit Vorsprüngen (11) versehen sein.

Die Schloß-Lenker-Kombination wird, wie beschrieben an das Fahrrad und z. B. an eine Laterne, oder nur an das Fahrrad angebracht und dann die erste Schließvorrichtung (8) abgesperrt. Nun zieht der Benutzer die weitere Stange aus dem Griff soweit heraus, bis sie teilweise, bzw. ganz im anderen Griff verschwindet und dort einrastet. Der Benutzer sperrt dann die zweite Schließvorrichtung (8) ab.

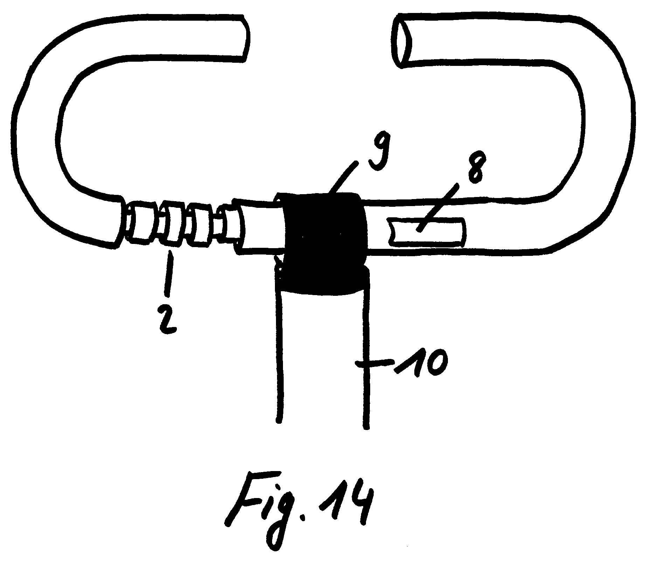

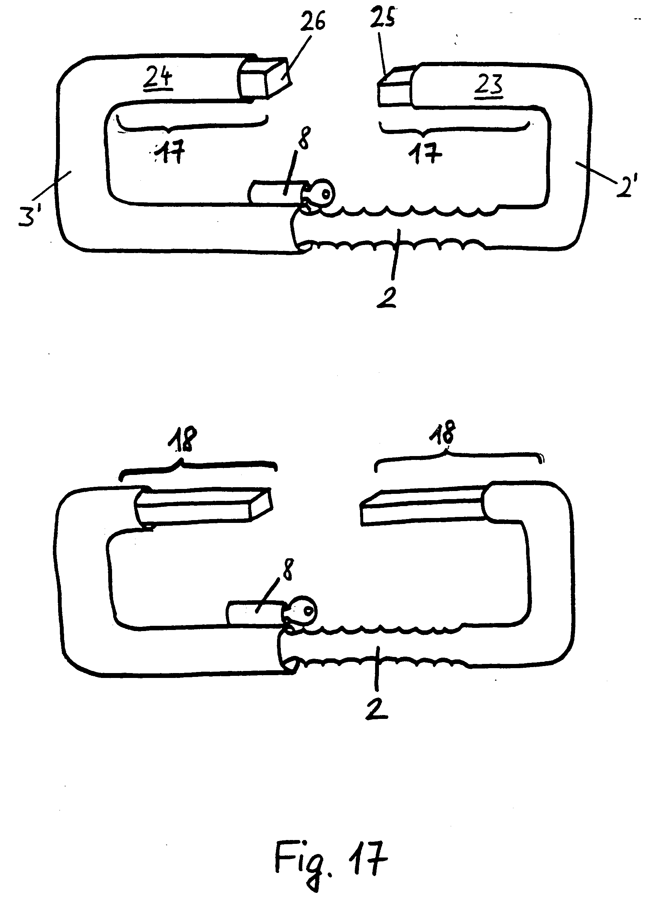

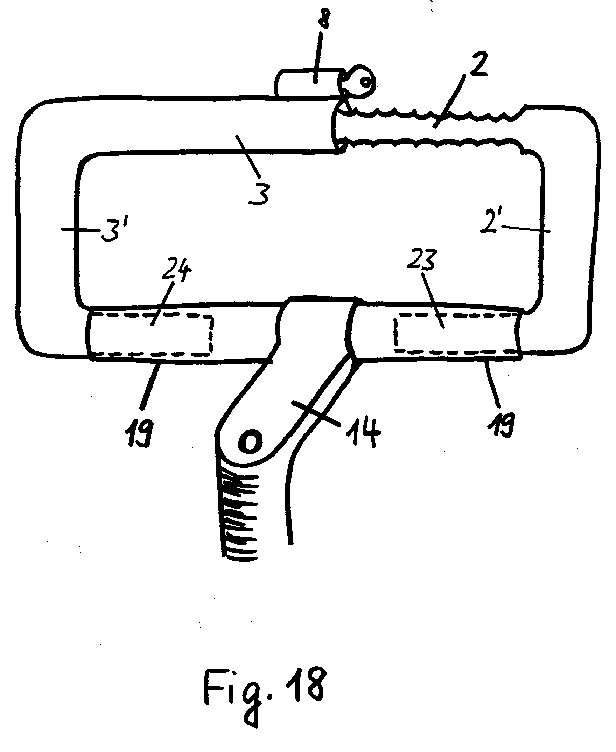

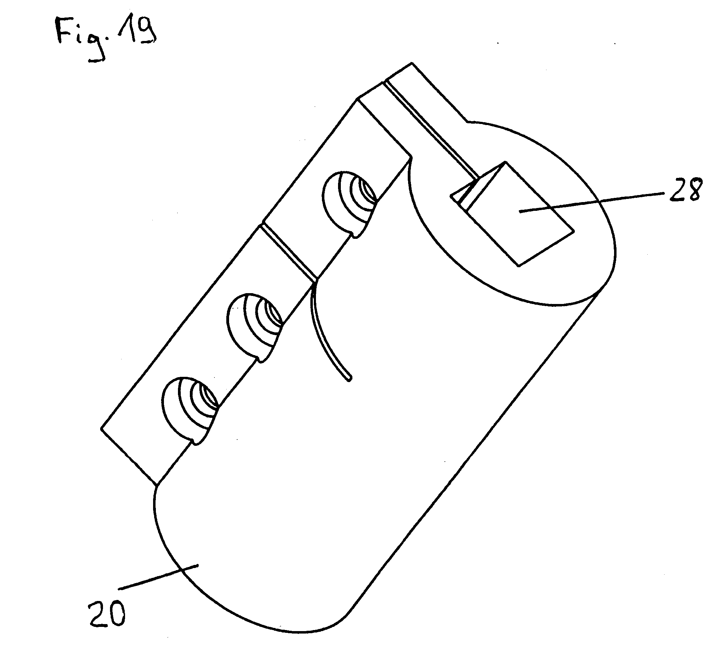

Die Schloß-Lenker-Kombination soll mittels dafür vorgesehener Befestigungsvorrichtung/en (9) an den Fahrradlenker angebracht werden. Da die Mitte des Fahrradlenkers schon durch die eigene Befestigung am Fahrrad besetzt ist, sollten zur Montage des Schloßlenkers mindestens zwei Befestigungsvorrichtungen vorgesehen sein, um der Schloß-Lenker-Kombination seine erforderliche Stabilität zu geben (Fig. 11). Als Befestigungsvorrichtung wäre z. B. eine Schwalbenschwanzkonstruktion (Fig. 16) angebracht. Dabei wird dessen erster Bestandteil (15) an die Schloß-Lenker-Kombination festgeschraubt und dessen zweiter Bestandteil (16) an den Fahrradlenker festgeschraubt. Will man nun die Schloß-Lenker-Kombination an den Fahrradlenker befestigen, schiebt man die beiden Schloß-Lenkerhälften mit den Bestandteilen (15) jeweils von außen nach innen auf die Bestandteile (16) des Fahrradlenkers und sperrt die Schloß-Lenker-Kombination wie gewohnt ab. Ein sicheres Lenken ist somit gewährleistet. Natürlich wird es auch möglich sein, die Schloß-Lenker-Kombination mit nur einer Befestigungsvorrichtung an die Lenkstange zu montieren. Selbstverständlich kann die Schloß-Lenker-Kombination die Fahrradlenkstange vollständig ersetzen (Fig. 14). Die Schloß-Lenker-Kombination kann auch entweder an den Lenkerschaft (10) oder an den Lenkervorbau (14) mit geeigneter Befestigung fixiert werden.

Zudem besteht die Möglichkeit, die Griffe (17, 18) in die Enden des Fahrradlenkers zu schieben. Dabei sollten die Griffe (teilweise) vieleckig geformt sein, sowie die Gegenstücke, die sich in den Enden des Fahrradlenkers befinden.
Da die üblichen Fahrradlenker keine vieleckig geformten Gegenstücke in ihren Enden aufweisen, muß es also zum Nachrüsten einen Adapter (20) geben, der zum einen kompatibel zu fast allen Fahrradlenkertypen ist und zum anderen an die Enden des Fahrradlenkers festgeschraubt werden kann. nicht stört und schwer entwendet werden kann.
Eine weitere Möglichkeit, die Griffe der Schloß-Lenker-Kombination in die Enden des Fahrradschlosses zu schieben und gleichzeitig zu fixieren besteht darin, die Griffe kegelförmig zu formen und sie durch einen Drehmechanismus in die Enden des Fahrradlenkers zu pressen, um dann die Schloß-Lenker-Kombination in dieser Stellung abzusperren.

Die Vorteile dieser Erfindung bestehen darin, daß das Fahrradschloß eine weitere nützliche Funktion aufweist und somit kein "totes Gewicht" am Fahrrad darstellt. Dadurch, daß die Schloß-Lenker-Kombination den Lenker vollständig ersetzen kann, wäre es töricht, das 'Sicherheitsschloß' aufzubrechen, da ein Wegfahren folglich nicht mehr möglich ist. Dies bedeutet, daß die Schloß-Lenker-Kombination eine Abschreckung für Fahrraddiebe darstellen kann.

## Patentansprüche

1. Schloß-Lenker-Kombination für Fahrräder oder dergleichen, mit einem ersten Hauptelelement (3'), das einen wenigstens teilweise hohl ausgebildeten Schenkel (3) aufweist, mit einem zweiten komplementären Hauptelement (2'), welches mit einem Schenkel (2) in den hohlen Schenkel (3) des ersten Hauptelements (3') steckbar ist, mit einer Befestigungsvorrichtung (9) für die Hauptelemente (2', 3') an einem bestehenden Fahrradlenker (22) oder an einem Lenkervorbau (14) oder an einem Lenkerschaft (10), und mit einer Schließvorrichtung (8), welche die zusammengesteckten Hauptelemente (2', 3') in diesem Zustand arretiert, wobei die Hauptelemente (2', 3') dann, wenn sie nicht als Diebstahlsicherung verwendet werden, im zusammengesteckten Zustand oder einzeln an der Befestigungsvorrichtung (9) befestigt werden können.

2. Schloß-Lenker-Kombination nach Anspruch 1,
**dadurch gekennzeichnet**, daß
die Befestigungsvorrichtung eine zweiteilige Schwalbenschwanzkonstruktion (15, 16) ist, deren erster Bestandteil (15) an dem Fahrradschloß (21) befestigbar ist, und deren zweiter Bestandteil am Fahrradlenker (22) oder dem Lenkervorbau (14) befestigbar ist.

3. Schloß-Lenker-Kombination für Fahrräder deren Lenker (22) mit hohlen Enden (19) versehen sind oder dergleichen, mit einem ersten Hauptelement (3'), das einen wenigstens teilweise hohl ausgebildeten Schenkel (3) aufweist, mit einem zweiten komplementären Hauptelement (2'), welches mit einem Schenkel (2) in den hohlen Schenkel (3) des ersten Hauptelements (3') steckbar ist, und mit einer Schließvorrichtung (8), welche die zusammengesteckten Hauptelemente (2', 3') in diesem Zustand arretiert, wobei die Hauptelemente (2', 3') dann, wenn sie nicht als Diebstahlsicherung verwendet werden, mit ihren beiden freien Schenkeln (23, 24) in den hohlen Enden (19) des Fahrradlenkers (22) aufgenommen sind (Fig. 18).

4. Schloß-Lenker-Kombination nach Anspruch 3,
**gekennzeichnet durch**
je einen Adapter (20), der an den Enden (19) des Fahrradlenkers (22) befestigbar ist oder in die hohlen Enden (19) integriert ist, und der eine Ausnehmung (28) zur Aufnahme eines freien Schenkels (23, 24) der Hauptelemente (2', 3') aufweist.

5. Schloß-Lenker-Kombination nach einem der Ansprüche 1-4,
**dadurch gekennzeichnet**, daß
der Schenkel (2) des zweiten Hauptelements (2') eine Reihe von radialen, konzentrischen Einkerbungen (13) aufweist, in welche zum Verschließen des Fahrradschlosses (21) ein Bolzen der Schließvorrichtung (8) eingreift.

6. Schloß-Lenker-Kombination nach Anspruch 5,
**dadurch gekennzeichnet**, daß
die Einkerbungen (13) umlaufend oder als einzelne Vertiefungen (4) ausgeführt sind.

7. Schloß-Lenker-Kombination nach einem der vorstehenden Ansprüche,
**dadurch gekennzeichnet**, daß
die Schließvorrichtung (8) ein handelsübliches Zylinderschloß ist, welches mittels eines Schlüssels oder einer Zahlenkombination geöffnet werden kann.

8. Schloß-Lenker-Kombination nach einem der vorstehenden Ansprüche,
**dadurch gekennzeichnet**, daß
ein Blockiermechanismus gegen ein gegenseitiges Verdrehen der Hauptelemente (2', 3') vorgesehen ist.

9. Schloß-Lenker-Kombination nach Anspruch 8,
**dadurch gekennzeichnet**, daß
der Blockiermechanismus darin besteht, daß das Innere der zusammengesetzten Hauptelemente (2', 3') an einem Ende ein Vieleck (5) aufweist, das mit einem entsprechend geformten Gegenstück (6) in dem wenigstens teilweise hohl ausgebildeten Schenkel (3) des ersten Hauptelements (3') einen Formschluß gegen Verdrehung bildet.

10. Schloß-Lenker-Kombination nach einem der vorstehenden Ansprüche,
**dadurch gekennzeichnet**, daß
in den Griffbereichen (1) ein schaumstoffartiger oder gummiartiger Antirutschbelag vorgesehen ist.

11. Schloß-Lenker-Kombination nach einem der Ansprüche 1-10,
**dadurch gekennzeichnet**, daß
die Hauptelemente (2', 3') derart zusammensteckbar sind, daß ein in sich geschlossenes Fahrradschloß (21) gebildet wird.

12. Schloß-Lenker-Kombination nach einem der Ansprüche 1-10,
**dadurch gekennzeichnet**, daß
die Hauptelemente (2', 3') derart zusammensteckbar sind, daß zwischen den zwei stirnseitigen Enden (25, 26) der freien Schenkel (23, 24) ein Zwischenraum (27) verbleibt (Fig. 17).

## Claims

1. Lock/handlebar combination for bicycles or the like, comprising a first main element (3') having an at least partly hollow limb (3), a second complementary main element (2') which can be inserted via a limb (2) into the hollow limb (3) of the first main element (3'), a fixing device (9) for fixing the main elements (2', 3') to an existing bicycle handlebar (22) or to the front part (14) of a handlebar or to a handlebar shaft (10), and a locking device (8) which locks the assembled main elements (2', 3') in this state, wherein, if they are not being used for theft protection, the main elements (2', 3') can then be fixed to the fixing device (9) in the assembled state or separately.

2. Lock/handlebar combination according to claim 1, characterised in that the fixing device is a two-part dovetail construction (15, 16), the first component (15) of which can be fixed to the bicycle lock (21) and the second component of which can be fixed to the bicycle handlebar (22) or to the front part (14) of the handlebar.

3. Lock/handlebar combination for bicycles the handlebar (22) of which is provided with hollow ends (19), or the like, comprising a first main element (3') having an at least partly hollow limb (3), a second complementary main element (2') which can be inserted via a limb (2) into the hollow limb (3) of the first main element (3'), and a locking device (8) which locks the assembled main elements (2', 3') in this state, wherein, if they are not being used for theft protection, the main elements (2', 3') are then received via their two free limbs (23, 24) in the hollow ends (19) of the bicycle handlebar (22) (Fig. 18).

4. Lock/handlebar combination according to claim 3, characterised by respective adapters (20) which can be fixed to the ends (19) of the bicycle handlebar (22) or are integrated into the hollow ends (19) and have recesses (28) for receiving a free limb (23, 24) of the main elements (2', 3').

5. Lock/handlebar combination according to one of claims 1-4, characterised in that the limb (2) of the second main element (2') has a series of radial concentric notches (13) engaged by a bolt of the locking device (8) in order to lock the bicycle lock (21).

6. Lock/handlebar combination according to claim 5, characterised in that the notches (13) are continuous or are in the form of individual indentations (4).

7. Lock/handlebar combination according to one of the preceding claims, characterised in that the locking device (8) is a commercially available cylinder lock which can be opened by a means of a key or a combination.

8. Lock/handlebar combination according to one of the preceding claims, characterised by a blocking mechanism to prevent mutual rotation of the main elements (2', 3').

9. Lock/handlebar according to claim 8, characterised in that the blocking mechanism consists in that the interior of the assembled main elements (2', 3') is provided at one end with a polygon (5) which, together with a correspondingly shaped mating component (6) in the at least partly hollow limb (3) of the first main element (3'), provides positive locking to prevent rotation.

10. Lock/handlebar combination according to one of the preceding claims, characterised in that a foam-like or rubber-like anti-slip coating is provided in the handle regions (1).

11. Lock/handlebar combination according to one of claims 1-10, characterised in that the main elements (2', 3') can be assembled together so as to form a self-contained bicycle lock (21).

12. Lock/handlebar combination according to one of claims 1-10, characterised in that the main elements (2', 3') can be assembled together in such a manner that an intermediate space (27) remains between the two face ends (25, 26) of the free limbs (23, 24) (Fig. 17).

## Revendications

1. Combinaison d'un guidon et d'un cadenas pour bicyclettes ou similaires, comportant un premier élément principal (3') comprenant une branche (3) de configuration au moins partiellement creuse, un deuxième élément principal (2') dont une branche (2) peut être emboîtée dans la branche creuse (3) du premier élément principal (3'), comportant un dispositif de fixation (9) fixant les éléments principaux (2', 3') sur un guidon existant (22) de bicyclette, ou sur une partie avant (14) du guidon, ou sur une broche (10) de guidon, et un dispositif de serrure (8) qui arrête les éléments principaux (2', 3') emmanchés l'un dans l'autre dans cet état, les éléments principaux (2', 3') pouvant être fixés sur le dispositif de fixation (9), à l'état assemblé ou de façon individuelle, lorsqu'ils ne sont pas utilisés en tant qu'antivol.

2. Combinaison selon la revendication 1, caractérisée en ce que le dispositif de fixation est une construction à queue d'aronde en deux parties (15, 16), dont le premier composant (15) peut être fixé sur le cadenas (21) de la bicyclette, et dont le second composant (16) peut être fixé sur le guidon (22) de la bicyclette ou sur la partie avant (14) du guidon.

3. Combinaison pour bicyclettes ou similaires, dont le guidon (22) est pourvu d'extrémités creuses, comportant un premier élément principal (3') comprenant une branche (3) de configuration au moins partiellement creuse, un deuxième élément principal (2') dont une branche (2) peut être emboîtée dans la branche creuse (3) du premier élément principal (3'), et un dispositif de serrure (8) qui arrête les éléments principaux (2', 3') emmanchés l'un dans l'autre dans cet état, les éléments principaux (2', 3'), lorsqu'ils ne sont pas utilisés en tant qu'antivol, pouvant être reçus dans les extrémités creuses (19) du guidon (22) de la bicyclette (figure 18) par leurs deux branches libres.

4. Combinaison selon la revendication 3, caractérisée par un adaptateur (20), qui peut être fixé sur les extrémités (19) du guidon (22) de la bicyclette ou est intégré dans les extrémités creuses (19), et qui comporte un évidement (28) destiné à recevoir l'une des branches libres (23, 24) des éléments principaux (2', 3').

5. Combinaison selon l'une des revendications 1 à 4, caractérisée en ce que la branche (2) du second élément principal (2') comporte une série d'encoches radiales concentriques (13) dans lesquelles s'engage, pour fermer le cadenas (21) de la bicyclette, un axe du dispositif de serrure (8).

6. Combinaison selon la revendication 5, caractérisée en ce que les encoches (13) sont réalisées sous forme d'encoches périphériques ou sous forme d'évidements individuels (4).

7. Combinaison selon l'une des revendications précédentes, caractérisée en ce que le dispositif de serrure (8) est une serrure cylindrique à pompe, courante du commerce, qui peut être ouverte au moyen d'une clé ou d'une combinaison de chiffres.

8. Combinaison selon l'une des revendications précédentes, caractérisée en ce qu'un mécanisme de blocage est prévu pour interdire une rotation relative des éléments principaux (2', 3') l'un par rapport à l'autre.

9. Combinaison selon la revendication 8, caractérisée en ce que le mécanisme de blocage consiste en ce que l'intérieur des éléments principaux (2', 3') assemblés comporte, à l'une de leurs extrémités, un polygone (5) qui forme une liaison par conjugaison des formes avec un élément conjugué (6) configuré en conséquence, ménagé dans ladite branche (3) au moins partiellement creuse du premier élément principal (3'), interdisant alors une rotation relative.

10. Combinaison selon l'une des revendications précédentes, caractérisée en ce qu'une garniture antidérapante du type mousse ou caoutchouc est prévue au niveau des poignées (1).

11. Combinaison selon l'une des revendications 1 à 10, caractérisée en ce que les éléments principaux (2', 3') peuvent être emboîtés l'un dans l'autre d'une manière telle qu'ils forment un cadenas (21) fermé pour bicyclettes.

12. Combinaison selon l'une des revendications 1 à 10, caractérisée en ce que les éléments principaux (2', 3') peuvent être emboîtés l'un dans l'autre d'une manière telle qu'un espace intermédiaire (27) (figure 17) reste entre les deux extrémités frontales (25, 26) des branches libres (23, 24).
